(19) Europäisches Patentamt
European Patent Office
Office européen des brevets

(11) **EP 4 653 392 A1**

(12) **EUROPEAN PATENT APPLICATION**
published in accordance with Art. 153(4) EPC

(43) Date of publication:
26.11.2025 Bulletin 2025/48

(21) Application number: 24792411.1

(22) Date of filing: 18.03.2024

(51) International Patent Classification (IPC):
*C01F 7/025* $^{(2022.01)}$   *C04B 35/10* $^{(2006.01)}$
*C04B 35/111* $^{(2006.01)}$

(52) Cooperative Patent Classification (CPC):
C01F 7/025; C04B 35/10; C04B 35/111

(86) International application number:
PCT/JP2024/010515

(87) International publication number:
WO 2024/219135 (24.10.2024 Gazette 2024/43)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.04.2023 JP 2023070415
25.09.2023 JP 2023160734

(71) Applicant: Sumitomo Chemical Company, Limited
Tokyo 103-6020 (JP)

(72) Inventors:
• OZAKI, Daichi
  Niihama-shi, Ehime 792-8521 (JP)
• KUROKAWA, Toshihisa
  Niihama-shi, Ehime 792-8521 (JP)
• KISHIDA, Hiroshi
  Osaka 554, 8558 (JP)

(74) Representative: Cabinet Beau de Loménie
103, rue de Grenelle / CS 90800
75340 Paris Cedex 07 (FR)

(54) **ALUMINA GRANULE**

(57) An alumina granule composed of primary alumina particles bound by a binder, wherein the granule has internal pores, and a pore radius corresponding to the maximum value of the log differential pore volume is 0.055 μm or less.

Fig. 1

## Description

Technical Field

The present disclosure relates to an alumina granule.

Background Art

A method for manufacturing a ceramic sintered body includes a method of press molding a ceramic raw material to form a molded body and then sintering the molded body. A ceramic granule is known as a ceramic raw material for press molding (for example, Patent Literatures 1 and 2).

Patent Literature 1 discloses a ceramic granule containing an organic component and a ceramic powder, wherein the ceramic granule has an average granule diameter Dp of 10 to 90 $\mu$m, a compressive fracture strength $\sigma$p of 0.1 to 5 MPa, and the average granule diameter Dp and the compressive fracture strength $\sigma$p satisfy the following expression;

$$10 \leq Dp \times \sigma p \leq 45 \; [\mu m \cdot MPa]$$

Patent Literature 2 discloses a ceramic granule for press molding containing an organic component and a ceramic powder, characterized in that the ceramic granule for press molding has an average granule diameter of 40 to 100 $\mu$m as well as a water content in the ceramic granule for press molding of 0.6 to 1.5% by weight.

Citation List

Patent Literature

Patent Literature 1: Japanese Patent Laid-Open No. 2006-27914
Patent Literature 2: Japanese Patent Laid-Open No. 2007-197265

Summary of Invention

Problems to be Solved by Invention

In terms of reducing an energy consumption at the time of sintering, an alumina granule which can manufacture a dense alumina sintered body at a low sintering temperature (in other words, an alumina granule with an excellent sinterability at a low temperature) is desirable. However, Patent Literatures 1 and 2 do not study about improving the sinterability of the alumina granule at a low temperature.

The present disclosure has been made in view of the above circumstances, and an objective of the present disclosure is to provide an alumina granule having an excellent sinterability at a low temperature.

Means to Solve the Problems

Aspect 1 of the present invention provides,

an alumina granule composed of primary alumina particles bound by a binder, wherein
the granule has internal pores, and a pore radius corresponding to the maximum value of the log differential pore volume is 0.055 $\mu$m or less.

Aspect 2 of the present invention provides,
the alumina granule according to Aspect 1, wherein the primary alumina particles have a specific surface diameter of 90 nm or more and less than 200 nm.

Aspect 3 of the present invention provides,
the alumina granule according to Aspect 1 or 2, wherein the primary alumina particles have an average circularity of 0.74 or more.

Aspect 4 of the present invention provides,
the alumina granule according to any one of Aspects 1 to 3, wherein the primary alumina particles have an average aspect ratio of 1.40 or less.

Aspect 5 of the present invention provides,
the alumina granule according to any one of Aspects 1 to 4, comprising 10 to 3,000 ppm of a sintering additive in terms of metal element based on 100% by mass of an alumina content contained in the alumina granule.

Effects of Invention

The present disclosure can provide an alumina granule with an excellent sinterability at a low temperature.

Brief Description of Drawings

[Figure 1] Figure 1 is a graph of the log differential pore volume plotted against the pore radius for the pore of the alumina granule according to the embodiment.
[Figure 2] Figure 2 displays SEM images of the alumina granules for Examples 1 and 2.
[Figure 3] Figure 3 displays SEM images of the alumina granules for Comparative Examples 1 and 2.
[Figure 4] Figure 4 displays photographs of sintered bodies for translucency measurement.
[Figure 5] Figure 5 displays photographs of colored alumina sintered bodies.

Embodiments for Carrying out Invention

The present inventors have studied extensively in order to realize an alumina granule with an excellent sinterability at a low temperature. As a result, the present inventors have found that it is achieved by an alumina granule composed of primary alumina particles, in which the granule has internal pores, and a pore radius corresponding to the maximum value of the log differential pore volume is below a certain level.
Hereinafter, an alumina granule according to the present embodiment will be described in detail.

[Alumina granule]

(A granule has internal pores, and a pore radius corresponding to the maximum value of the log differential pore volume is 0.055 $\mu$m or less)

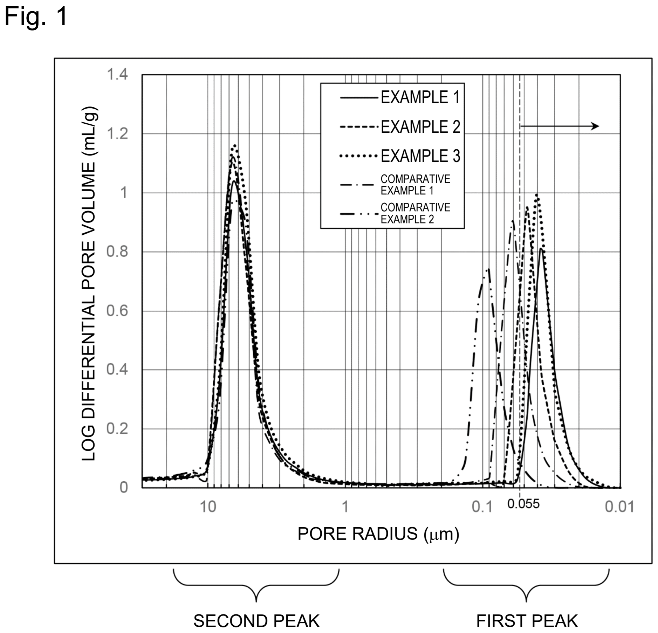

An alumina granule is composed of primary alumina particles bound by a binder.
The alumina granule has internal pores formed among a plurality of the primary alumina particles. The alumina granule of the present embodiment has the internal pores, and a pore radius corresponding to the maximum value of the log differential pore volume (hereinafter, simply referred to as "a pore radius of an alumina granule") is 0.055 $\mu$m or less. Such alumina granule is thought to have an excellent sinterability at a low temperature for the following reasons.
A small pore radius of an alumina granule means that a gap among the primary alumina particles in the alumina granule is narrow. Such alumina granule is thought to promote densification at the time of sintering. As a result of intensive research, the present inventors have found that if the pore radius of the alumina granule is 0.055 $\mu$m or less, densification fully progresses, and a dense alumina sintered body can be obtained even if the sintering temperature is low (for example, 1,250 to 1,350°C).
The pore radius of the alumina granule is preferably 0.050 $\mu$m or less, more preferably 0.043 $\mu$m or less, still more preferably 0.040 $\mu$m or less. A smaller pore radius of the alumina granule is preferable, and an example is 0.001 $\mu$m or more.
The pore radius of the alumina granule is obtained from a graph of a log differential pore volume plotted against a pore radius obtained by a pore size distribution measurement.
For the pore size distribution measurement, a pore size distribution analyzer (for example, a pore size distribution analyzer AutoPore V9600 manufactured by Micromeritics Instrument Corporation) is used with a measuring absolute pressure in a range of 1.07 and 59,256 psia. A graph of the log differential pore volume plotted against the pore size obtained by the pore size distribution analyzer is created (see Figure 1). There are two peaks in the graph in Figure 1: the peak with a smaller pore radius (the first peak) corresponds to an internal pore of the alumina granule; and the peak with a larger pore radius (the second peak) corresponds to a gap (pore) among a plurality of the alumina granules. The position of the highest point of the first peak, in other words, the pore radius corresponding to the maximum value of the log differential pore volume, is obtained and taken as a pore radius of the alumina granule.
(Primary alumina particle having a specific surface diameter of 90 nm or more and less than 200 nm)
A specific surface diameter of the primary alumina particles composing the alumina granule is preferably 90 nm or more and less than 200 nm whereby the sinterability of the alumina granule at a low temperature can further be improved.

The specific surface diameter of the primary alumina particle is preferably 90 nm or more, more preferably 110 nm or more, still more preferably 130 nm or more, particularly preferably 140 nm or more, and preferably less than 200 nm, more preferably 190 nm or less, still more preferably 170 nm or less, particularly preferably 145 nm or less.

The specific surface diameter of the primary alumina particle is calculated from the following general formula (1) illustrating a relationship of a particle diameter and a specific surface area of a spherical particle:

$$A = 6 / (S \times \rho) \quad (1)$$

where

A is a specific surface diameter ($\mu$m) of a primary alumina particle,
S is a specific surface area ($m^2$/g) of a primary alumina particle, and
$\rho$ is a density (g/$cm^3$) of a primary alumina particle, which is 3.99 g/$cm^3$ herein.

A specific surface area (BET specific surface area) of a primary alumina particle is obtained by a single-point nitrogen adsorption method in accordance with a method specified in JIS-Z 8830:2013, "Determination of the Specific Surface Area of Powders (Solids) by Gas Adsorption-BET Method." The specific surface area of the primary alumina particle can either be measured after pre-firing the alumina granule at 600°C to remove the binder; or the primary alumina particle is measured as it is before granulating. Regardless of the state of measurement, almost the same measurement results are obtained.

A specific measurement method includes, for example, a use of a fully automatic BET specific surface area analyzer, Macsorb, manufactured by Mountech Co., Ltd.; 0.1 g of a sample (the alumina granule after pre-firing or the primary alumina particles before granulating) is added to a cell and pre-treated at 200°C for 20 minutes to take measurements by nitrogen adsorption.

(Average circularity of the primary alumina particles of 0.74 or more)

The average circularity of the primary alumina particles is preferably 0.74 or more whereby the sinterability of the alumina granule at a low temperature can further be improved. This is because the larger the average circularity of the primary alumina particles (in other words, the more spherical the primary alumina particle is), the narrower the gap among a plurality of the primary alumina particles thereby improving the packing density.

The average circularity of the primary alumina particles is preferably 0.74 or more, more preferably 0.79 or more. The upper limit for the average circularity of the primary alumina particles is 1.00.

(Average aspect ratio of the primary alumina particles of 1.40 or less)

The average aspect ratio of the primary alumina particles is preferably 1.40 or less whereby the sinterability of the alumina granule at a low temperature can further be improved.

The aspect ratio herein is obtained as a ratio of "the maximum diameter" against "a particle diameter in perpendicular direction" by measuring both of the maximum diameter of the primary alumina particles and the particle diameter in a direction perpendicular to the measuring direction of the maximum diameter. A minimum value for the average aspect ratio of the primary alumina particles defined as such is 1. The average aspect ratio of 1.40 or less indicates that the average aspect ratio is close to 1, and the primary alumina particles are assumed to have a shape that is close to a sphere. If the primary alumina particles have a shape close to a sphere, the gap among a plurality of the primary alumina particles becomes narrower thereby improving the packing density.

The average aspect ratio of the primary alumina particles is preferably 1.40 or less, more preferably 1.30 or less. The average aspect ratio of the primary alumina particles may be 1.05 or more, 1.10 or more, or 1.20 or more.

The average circularity and the average aspect ratio of the primary alumina particles are both obtained by analyzing an SEM image of the alumina granule.

An example of a measurement method is described below.

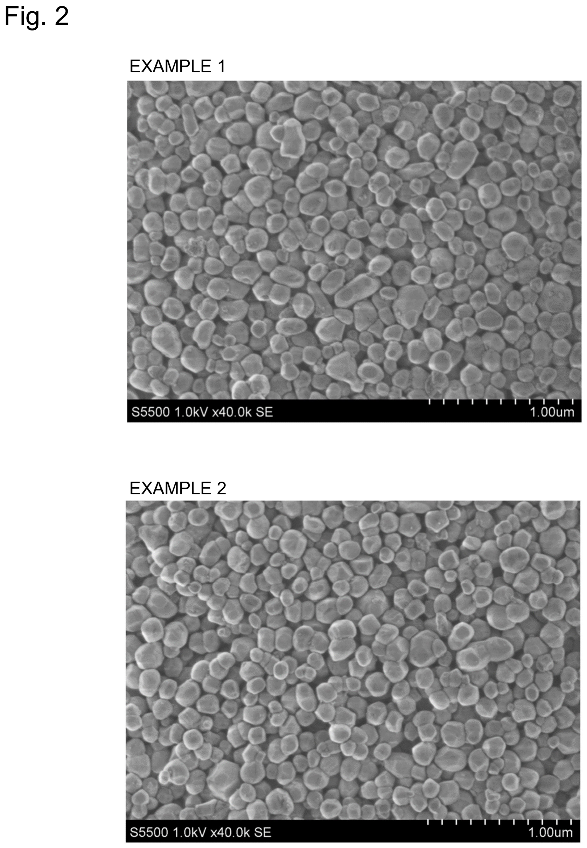

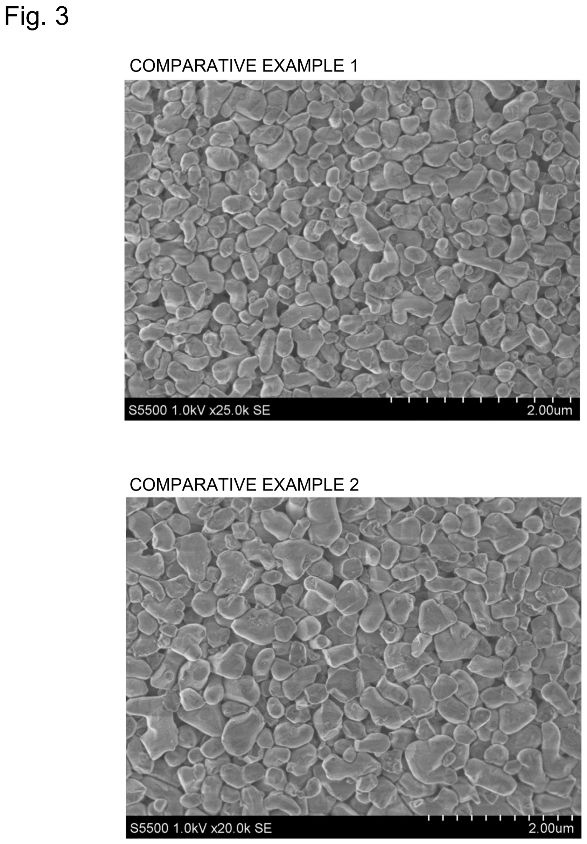

A scanning electron microscope (for example, a scanning electron microscope S-5500 manufactured by Hitachi High-Tech Corporation) is used to produce an SEM image of the alumina granule with an accelerating voltage of 1 keV. When acquiring the SEM image of the alumina granule, a magnification is adjusted so that 100 to 300 primary alumina particles composing the alumina granule are displayed per image. An example is a magnification of 10,000 to 50,000 times. The SEM images of the alumina granules for Examples 1 and 2 displayed in Figure 2 were produced with a magnification of 40,000 times; the SEM image of the alumina granule for Comparative Example 1 displayed in Figure 3 was produced with a magnification of 25,000 times; and the SEM image of the alumina granule for Comparative Example 2 was produced with a magnification of 20,000 times.

The SEM image can be analyzed by using a commercially available image analysis software (for example, ImageJ manufactured by National Institutes of Health) or an image analysis service (for example, DeepCle by Sakai Chemical Industry Co., Ltd.). In Examples, an AI-based image analysis service, DeepCle (AI Model: 3.3087_2f_r) of Sakai Chemical Industry Co., Ltd. was used for an AI-based automated analysis. The circularity and the aspect ratio of 100 to 300 primary alumina particles are obtained by analyzing the image. An arithmetic mean for a plurality of the circularities obtained is calculated to obtain the average circularity. Similarly, an arithmetic mean for a plurality of the aspect ratios obtained is calculated to obtain the average aspect ratio.

(Containing 10 to 3,000 ppm of a sintering additive)

The alumina granule optionally contains 10 to 3,000 ppm of a sintering additive as necessary. When sintering the alumina granule, the sintering additive contained in the alumina granule may function to promote a sintering process. The content (ppm) of the sintering additive is obtained as a content of the sintering additive in terms of metal element when the alumina content in the alumina granule is taken as 100% by mass. The content of the sintering additive is preferably 10 ppm or more, more preferably 100 ppm or more, still more preferably 200 ppm or more, particularly preferably 300 ppm or more, and preferably 3,000 ppm or less, more preferably 2,000 ppm or less, still more preferably 1,500 ppm or less.

For the sintering additive, a compound that produces an effect as a sintering additive at the time of sintering in the air is used. A sintering additive suitable for the present embodiment includes a compound that forms an oxide at 1,200°C or less in the air, and such compound may function as a sintering additive when sintering at a low temperature (for example, 1,250 to 1,350°C). The compound includes, for example, an oxide, a nitrate, an acetate, a hydroxide, a chloride, and the like. Specifically, a compound of such as magnesium, titanium, scandium, yttrium, zirconium, hafnium, lanthanum, zinc, or tin, is suitable. Among these, a magnesium compound, especially magnesium oxide, is preferable.

As a result of studies, the present inventors have found that the alumina granule containing an appropriate amount (for example, 300 ppm or more and 1,200 ppm or less of the sintering additive in total) of one or more types selected from the group consisting of a magnesium compound, a zinc compound, and a tin compound as a sintering additive is preferable for manufacturing an alumina sintered body having an excellent translucency.

Recently, an alumina sintered body has been under consideration as a dental material, and the alumina granule having an excellent sinterability at a low temperature according to the present embodiment has an advantage of being able to sinter the alumina sintered body for dental prosthesis in a simple heating furnace. In addition, the alumina granule containing the abovementioned sintering additive can manufacture an alumina sintered body with an excellent translucency and thus is preferable as a raw material for a dental prosthesis with natural translucency.

As a result of further study on the sintering temperature when magnesium oxide is used as a sintering additive, the present inventors have found that the translucency is exhibited at the sintering temperature of at least 1,350°C, and the translucency further improves at the sintering temperature of 1,450°C.

The alumina granule optionally contains a color additive to control the color tone of the alumina sintered body. For the color additive, one or more types of compounds of, for example, chromium, manganese, cobalt, nickel, iron, and the like, are combined and added. The compound includes, for example, an oxide, a nitrate, an acetate, a hydroxide, a chloride, and the like.

A color exhibited on the alumina sintered body is determined by the type of the color additive. For example, using a chromium and manganese containing compound can obtain a red colored; using a cobalt containing compound can obtain a blue colored; using a nickel containing compound can obtain a green colored; and using an iron containing compound can obtain a yellow-colored alumina sintered body. By choosing the type of the color additive appropriately, an alumina sintered body having a desired color (for example, bright red) can be obtained.

The added amount of the color additive preferably contains 10 to 3,000 ppm of the amount of the color additive in terms of the metal element when the alumina content contained in the alumina granule is taken as 100% by mass.

The contents of the sintering additive (for example, magnesium oxide) and the color additive (for example, chromium oxide) can be obtained from a quantitative elemental analysis (for example, quantitative analysis of Mg and Cr) by an inductively coupled plasma atomic emission spectroscopy (ICP-AES).

The alumina granule may have a particle diameter D50, the cumulative 50% point from fine particle side of the volume-based cumulative particle size distribution, of 30 $\mu$m or more and 150 $\mu$m or less.

D50 of the alumina granule is measured by a laser diffraction/light scattering method.

An example of the measurement method is now described. The alumina granule is added to an aqueous solution of 0.2% sodium hexametaphosphate and mixed with a stirrer bar for 30 seconds to disperse. The dispersion liquid is poured into a measuring cell, and after degassing, a measurement is performed using Microtrac particle size analyzer MT-3300 manufactured by MicrotracBEL Corp. under the conditions of measurement time of 10 seconds, 2 measurements, refractive index of a particle of 1.77, and refractive index of a solvent of 1.333 to obtain D50.

It should be noted that the alumina granule rarely separates to primary alumina particles if it is only stirred with a stirring bar for a short period of time.

(Containing 0.1 to 5.0% by mass of a binder)

The content of a binder contained in the alumina granule is an amount that is enough to bind the primary alumina particles together; at the same time, it is desirable to have an amount that does not affect the pore radius in the alumina granule.

Based on such perspective, the alumina granule preferably contains 0.1 to 5.0% by mass of a binder when the entire alumina granule (including the binder) is taken as 100% by mass. The content of the binder contained in the alumina granule is preferably 0.1% by mass or more, more preferably 0.3% by mass or more, still more preferably 0.5% by mass or more, particularly preferably 0.8% by mass or more, and preferably 5.0% by mass or less, more preferably 4.0% by mass or less, still more preferably 2.0% by mass or less, particularly preferably 1.8% by mass or less when the entire alumina granule is taken as 100% by mass.

It is possible to determine the content of the binder from a weight loss in thermal analysis.

[Method for manufacturing the alumina granule]

A method for manufacturing the alumina granule of the embodiment is not particularly limited, but it is preferable to adopt the following manufacturing method as the alumina granule having the abovementioned physical properties can be manufactured with a high reproducibility. It should be noted that those skilled in the art to which the disclosure pertains may achieve different methods that can manufacture the alumina granule of the present embodiment in accordance with the descriptions thereof.

The method for manufacturing the alumina granule includes the steps of: providing primary alumina particles; producing an alumina slurry containing the primary alumina particles; and granulating the alumina granule from the alumina slurry.

(Step of providing primary alumina particles)

A step of providing primary alumina particles includes the steps of:

preparing a seed crystal slurry dispersed with a seed crystal;
mixing the seed crystal slurry with aluminum alkoxide to obtain an aluminum hydroxide slurry;
drying and firing the aluminum hydroxide slurry to obtain alumina particles (primary alumina particles); and
grinding the obtained alumina particles.

(1. Step of preparing a seed crystal slurry)

Alumina particles (raw material for a seed crystal) are dispersed in water and then subjected to a wet grinding with a ball mill. Then, the mixture is centrifuged using a refrigerated centrifuge (for example, CR7N manufactured by Eppendorf Himac Technologies Co., Ltd.) to remove precipitates. This allows to obtain a seed crystal slurry dispersed with the seed crystal. The seed crystal is preferably an $\alpha$-alumina. By using the $\alpha$-alumina seed crystal, conversion to an $\alpha$-alumina can proceed during sintering at a low temperature in a sintering step described later.

The particle diameter of the seed crystal is preferably small, and usually the seed crystal with the particle diameter of 0.01 to 0.2 $\mu$m is used.

The BET specific surface area of the seed crystal may affect the physical properties of the primary alumina particles obtained in the end. In order to limit the relative standard deviation (RSD) of the alumina particle distribution to be within the range (between 0.25 and 0.80) according to the embodiment, and/or to limit the crystalline diameter to be within a preferable range (between 650 and 1,400 Å), the BET specific surface area of the seed crystal is preferably 30 $m^2$/g or more, more preferably 40 $m^2$/g or more, still more preferably 50 $m^2$/g or more, particularly preferably 70 $m^2$/g or more.

The BET specific surface area is measured by the same method as the method for measuring the BET specific surface area of the primary alumina particles.

(2. Step of mixing the seed crystal slurry with aluminum alkoxide to obtain an aluminum hydroxide slurry)

The seed crystal slurry and aluminum alkoxide are continuously provided to a stirrer to mix. The mixture is sheared and stirred at high rotation with a stirrer, and the water in the seed crystal slurry and aluminum alkoxide undergo hydrolysis reaction to obtain a slurry containing aluminum hydroxide particles (aluminum hydroxide slurry) as a hydrolysis product.

"Shearing and stirring at high rotation" used herein is a stirring performed by mechanical energy, such as shear force, pressure fluctuation, cavitation, collision force, and potential core, generated in between a turbine (rotor) and a stator (screen) when a clearance gap between the turbine (rotor) and the stator (screen) is small (for example, 2 mm or less) and the turbine (rotor) is rotating at a high speed (for example, a circumferential speed of about 1 m/s to about 40 m/s).

In shearing and stirring at high rotation, the number of rotations of the turbine (rotor) is 3,000 rpm to 21,500 rpm, preferably 8,000 rpm to 15,000 rpm, for example, 10,000 rpm.

(3. Step of drying and firing the aluminum hydroxide slurry to obtain alumina particles (primary alumina particles))

The aluminum hydroxide slurry is dried by a known method, and the obtained aluminum hydroxide is fired in a firing furnace to obtain alumina particles (primary alumina particles).

Firing is usually performed at 800°C or more, preferably 900°C or more, and usually 1,000°C or less, preferably 980°C or less, more preferably 960°C or less.

Firing is optionally performed in the air, or it is optionally performed in an inert gas, such as a nitrogen gas or an argon gas; it is effective to fire while maintaining the partial pressure of water vapor in the atmosphere high (for example, a dew point of 30°C or more).

(Step of producing an alumina slurry containing the primary alumina particles)

The obtained primary alumina particles, a binder, a dispersant, and a solvent are mixed; optionally, an appropriate amount of a plasticizer, a sintering additive, or a color additive is mixed, and the mixture is mechanically stirred and mixed. In addition to a method of applying an ultrasound externally to stir and mix by a stirring blade or a stirrer etc., conventional methods may be used for mixing and stirring, including a method of using various types of grinding media, such as a ball mill and a dyno mill, and a method of using various types of agitators, such as an attritor and a pin mill.

An organic binder, such as polyvinyl alcohol, polyvinyl acetal, various types of acrylic polymers, methyl cellulose, polyvinyl acetate, polyvinyl butyral, various types of waxes, and various types of polysaccharides, may be used as a binder.

For a solvent, it is preferable to choose a suitable solvent depending on the type of a binder used together and the granulation method of the alumina granule. If the alumina granule is granulated by a spray dryer, an acrylic binder is suitable. In this case, water is mainly used as a solvent. Depending on the type of a binder and the granulation method used, various types of organic solvents (acetone, ethanol, toluene, and the like) may be used.

A dispersant may be added optionally, and it is preferable to choose a suitable dispersant depending on the type of the solvent used together. If the solvent is water, ammonium polycarboxylate [for example, trade name: SN-dispersant 5468, manufactured by San Nopco Limited] is mainly used as a dispersant. In the case of an organic solvent, ethyl oleate, sorbitan monooleate, sorbitan trioleate, polycarboxylate compound, and the like, is used as a dispersant. In addition, a polyester-based dispersant [trade name: Texahole 3012, manufactured by San Nopco Limited] is also suitable. However, the dispersant is not limited to this, and various dispersants may be used.

It should be noted that depending on the organic binder used together, a less viscous slurry may be produced if a dispersant is not used and thus the concentration of the alumina granule in the slurry can be increased. In such case, a dispersant does not need to be added.

A plasticizer may be optionally added, and it is preferable to choose a suitable plasticizer depending on the types of the binder and the organic solvent used together. A plasticizer used together with an organic binder includes ethylene glycol, diethylene glycol, polyethylene glycol, glycerol, polyglycerol, various types of ester compounds, and the like. Particularly, when an organic solvent is used, dibutyl phthalate, diethylhexyl phthalate, and the like are used, but the present invention is not limited to these.

A sintering additive may be optionally added. It is preferable to add the sintering additive in an amount such that 10 to 3,000 ppm of the sintering additive is contained in terms of metal element when the alumina content contained in the alumina granule is taken as 100% by mass.

A color additive may be optionally added. It is preferable to add the color additive in an amount such that 10 to 3,000 ppm of the color additive is contained in terms of metal element when the alumina content contained in the alumina granule is taken as 100% by mass.

The obtained alumina slurry is optionally degassed under a reduced pressure. In addition, various types of defoaming agents can be used. Furthermore, depending on the subsequent molding method, the viscosity of the slurry is optionally adjusted to 10 to 500 centipoises by adding various types of pH regulators and coagulating agents. For example, in the granulation by a spray dryer, it is preferable to adjust the viscosity of an alumina slurry to 30 to 300 centipoises by adjusting the pH with an aqueous hydrochloric acid solution, ammonia water, and the like, to produce a spherical granule. Furthermore, it is also possible to increase the alumina concentration in the slurry by stand-still deposition, centrifugal separation, and concentration under reduced pressure and the like by a rotary evaporator etc.

(Step of granulating the alumina granule from the alumina slurry)

The obtained alumina slurry is used to granulate the alumina granule.

A method of granulating the alumina granule from the alumina slurry can be performed by a known spray drying granulation method or an oscillating extrusion granulation method. In particular, the obtained alumina slurry is spray-dried by a spray dryer and the like to granulate an alumina granule.

(Modification: Method of directly granulating an alumina granule from primary alumina particles)

In the abovementioned method for manufacturing the alumina granule, the primary alumina particles are first converted to an alumina slurry to granulate the alumina granule, but the primary alumina particles are optionally granulated directly to an alumina granule without converting it to an alumina slurry.

For example, primary alumina particles, a binder, and various types of additives as desired are mixed and granulated by a stirring and granulating device to produce a granulated powder; then an extrusion granulation and drying by an oscillating granulator are repeatedly applied to the granulated powder to optionally produce an alumina granule.

It is possible to appropriately choose a granulation method of the alumina granule depending on the granulation amount of the granules for ceramic molding, the intended properties of ceramic molded body, and the like. It should be noted that the oscillating extrusion granulation method is a method to obtain particles having a specified particle diameter or less by performing the processes of crushing the particles granulated to a particle diameter of, for example, about several millimeters, on a screen and allowing the fine particles to pass through the screen in several steps with the screens made finer sequentially.

[Method for manufacturing alumina sintered body]

An example of a preferable method for manufacturing the alumina sintered body using the alumina granule according to the embodiment is described below.

The alumina granule is subjected to a uniaxial press forming, a cold isostatic press molding, and the like to produce a molded body. In the case of the cold isostatic press molding, an alumina granule is subjected to a uniaxial press molding under a pressure of 20 to 40 MPa, preferably 25 to 35 MPa, followed by an isotopical application of a pressure of 98 MPa or more, preferably 150 to 200 MPa, by a cold isostatic press molding machine to process the obtained molded body into a desired shape.

Two examples of the sintering conditions for manufacturing the alumina sintered body are provided.

(Condition 1)

· Sintering step

The molded body is fired at a temperature range of 1,250 and 1,350°C for 2 hours or more in the air or the oxygen atmosphere to obtain an alumina sintered body. The average temperature rising rate from room temperature to the sintering temperature is, for example, 200°C/hr.

The alumina granule according to the embodiment has an internal pore with a small radius and thus has an excellent sinterability at a low temperature; for example, even if the alumina granule is sintered at low temperatures of 1,250 to 1,350°C as in the condition 1, a dense alumina sintered body can be manufactured.

(Condition 2)

· Degreasing step

The molded body is fired at a temperature range of 500 and 1,200°C for 1 hour or more, preferably at a temperature range of 600 and 800°C for 2 hours or more, to degrease. The average temperature rising rate from room temperature to the firing temperature is, for example, 100°C/hr.

· Sintering step

After the degreasing step, the molded product is continued to be fired at a high temperature to obtain an alumina sintered body. In the condition 2, a firing atmosphere is not limited.

If firing in the atmosphere, the molded product is fired at a temperature range of 1,200 and 1,700°C, preferably a temperature range of 1,250 and 1,450°C, for 2 hours or more to obtain an alumina sintered body. A sintering temperature in the sintering step is above the sintering temperature in the degreasing step. The average temperature rising rate from the firing temperature in the degreasing step to the sintering temperature in the sintering step is, for example, 200°C/hr.

In addition to obtaining the alumina sintered body by low temperature sintering, the condition 2 is preferable when obtaining a translucent alumina sintered body using an alumina granule containing a sintering additive. When obtaining the translucent alumina sintered body, a condition for the sintering step is such that it is preferable to fire at a temperature range of 1,350 and 1,700°C in the air or the vacuum atmosphere; especially, firing at a temperature between 1400 and 1450°C can further improve the translucency of the alumina sintered body.

Examples

(Example 1)

(Production of primary alumina particles)

Alumina particles (raw material for a seed crystal) were dispersed in water, and the mixture was then subjected to a wet grinding using a ball mill. Then, the mixture was subjected to a centrifugation using a refrigerated centrifuge (CR7N manufactured by Eppendorf Himac Technologies Co., Ltd.) with a number of rotations of 4,000 rpm for 30 minutes, and precipitates were removed. As a result, a seed crystal slurry dispersed with a seed crystal was produced.

Aluminum isopropoxide and the seed crystal slurry were mixed using a precision dispersion/emulsification machine (CLEARMIX CLM-2.2S manufactured by M Technique Co., Ltd.) with a number of rotations of 10,000 rpm to hydrolyze. As a result, an aluminum hydroxide slurry was produced.

A mixing ratio of the aluminum isopropoxide and the seed crystal slurry was adjusted so that the aluminum component contained in the seed crystal (hereinafter, simply referred to as "aluminum parts by mass in the seed crystal") in terms of the oxide of the metal component was 10 parts by mass for 100 parts by mass of the total amount of the aluminum component contained in the aluminum isopropoxide and the seed crystal. It should be noted that the content (parts by mass) of each aluminum component was calculated and obtained on assumption that the aluminum isopropoxide used would all be converted to an alumina.

The obtained aluminum hydroxide slurry was dried at 150°C to obtain aluminum hydroxide particles, which were then put into an alumina crucible and fired in a gas furnace. The firing condition was such that the temperature was increased to the firing temperature of 965°C with the temperature rising rate of 200°C/hr and was held at that firing temperature for 4 hours to produce primary alumina particles.

A specific surface area (BET specific surface area) of the primary alumina particles before forming an alumina granule was measured. This result is deemed to be equivalent to a specific surface area of the primary alumina particles after forming the alumina granule.

(Production of alumina slurry)

A pot (3L volume), the inside of which lined with alumina, was filled with the obtained primary alumina particles (1,700 g), pure water (1,054 g), and a dispersant (7.95 g, SN-dispersant 5468 manufactured by San Nopco Limited), and alumina beads (3,540g, $\varphi$2-SSA-999W, manufactured by Nikkato Corporation), and the mixture was dispersed evenly under the conditions of 65 rpm for 6 hours to produce an alumina slurry.

(Production of alumina granule)

The obtained alumina slurry (705 g), pure water (69.6g), a binder (17.4 g, SA-261P, manufactured by Japan Coating Resin Corporation), a plasticizer (4.35g, PEG-400, manufactured by Fujifilm Wako Pure Chemical Corporation) were mixed and then stirred for 10 minutes. The obtained slurry was spray dried using a spray dryer (L-8i type, manufactured by Ohkawara Kakohki Co., Ltd.) under the conditions of a flow rate of 79 g/min, a number of atomizer rotations of 18,000 rpm, an inlet temperature of 180°C, an outlet temperature of 90°C, and a hot air pressure difference of 1.1 kPa, to produce an alumina granule.

The obtained alumina granule was subjected to a pore size distribution measurement and an observation by an SEM. A pore radius of the alumina granule was obtained from the pore size distribution measurement. An SEM image was analyzed to obtain the average circularity and the average aspect ratio of the primary alumina particles. Each measurement was performed by the measuring equipment and conditions illustrated in the embodiment. It should be noted that a sintering additive (MgO) was not added when the alumina granule was produced.

(Production of alumina sintered body)

A cylindrical mold with a diameter $\varphi$ of 20 mm was filled with the obtained alumina granule (5 g) and was subjected to a uniaxial molding with a pressure of 30 MPa for 30 seconds followed by a cold isostatic press (CIP) molding with a pressure of 98 MPa for 3 minutes to obtain an alumina molded body. The temperature was increased to 1,250°C or 1,350°C with the temperature rising rate of 200°C/hr, and the molded body was fired in the air and held at either temperature for 2 hours to obtain an alumina sintered body. A density of the obtained alumina sintered body was measured in water at 22°C by the Archimedes' method.

(Production of sintered body for translucency measurement)

A cylindrical mold with a diameter $\varphi$ of 20 mm was filled with the obtained alumina granule (1 g) and was subjected to a uniaxial molding with a pressure of 30 MPa for 30 seconds followed by a cold isostatic press (CIP) molding with a pressure of 200 MPa for 3 minutes repeated for five times to obtain an alumina molded body. The temperature was increased to 600°C with the temperature rising rate of 100°C/hr, and the molded body was fired in the air and held at that temperature for 2 hours to pre-fire. The temperature was then increased to 1,350°C or 1,450°C with the temperature rising rate of 200°C/hr, and the alumina pre-fired body was fired in the air and held at either temperature for 2 hours to obtain an alumina sintered body for translucency measurement (referred to as "a sintered body for translucency measurement" herein). The surface of the sintered body for translucency measurement was polished, and then the translucency was evaluated.

For the translucency evaluation, a haze meter NDH8000 manufactured by Nippon Denshoku Industries Co., Ltd. was used, and the device was set in accordance with the measurement methods of total luminous transmittance (TT) and parallel transmittance (PT) in JIS-K 7361-1:1997. A small diameter attachment was fitted, and a small diameter was set as a measuring diameter. Once the device was started up, the device was left to warm up for 30 minutes to take the measurement. The thickness of the sintered body for translucency measurement after polishing of its surface was set as 0.9 to 1.1 mm to measure the total luminous transmittance (TT) and the parallel transmittance (PT).

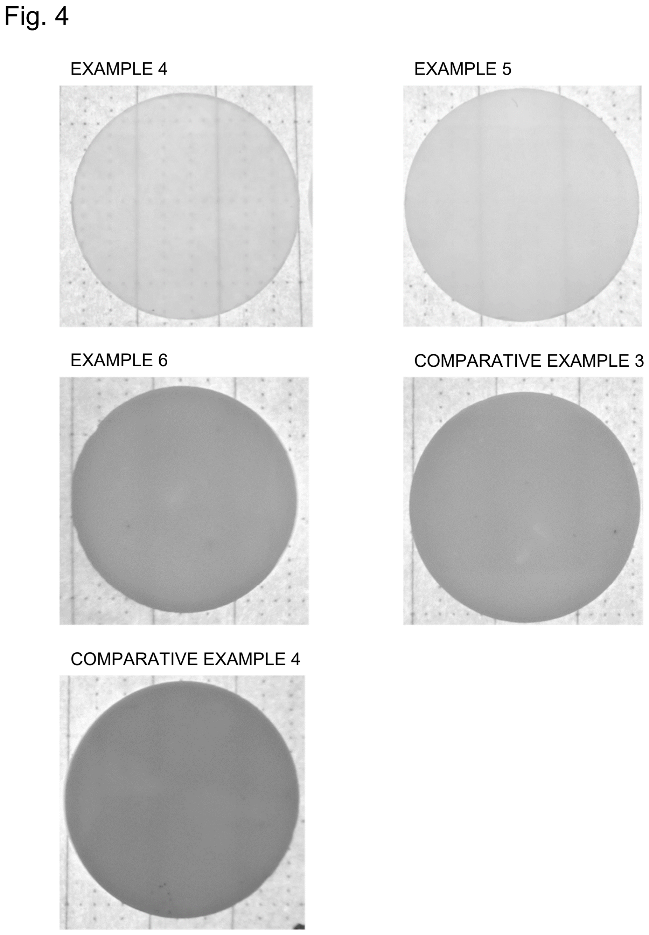

Figure 4 displays photographs of the sintered bodies for translucency measurement produced in Examples and Comparative Examples.

(Example 2)

In the same manner as Example 1, primary alumina particles were produced to prepare an alumina slurry; then, an alumina granule was produced to produce an alumina sintered body and a sintered body for translucency measurement except that an aluminum hydroxide slurry was prepared with a mixing ratio such that the aluminum parts by mass in the seed crystal was 5.6 parts by mass.

(Example 3)

In the same manner as Example 1, an alumina slurry was prepared to produce an alumina granule, and then, an alumina sintered body was produced except that $\alpha$-alumina powder (AKP-50 manufactured by Sumitomo Chemical Company, Ltd.) was used as primary alumina particles.

(Examples 4, 6, and 8)

Primary alumina particles were produced to produce an alumina slurry in the same manner as Example 1.

In addition, a high-purity magnesia powder (150 g, high purity and ultra fine single crystal magnesia powder 500A, manufactured by Ube Material Industries, Ltd.) and pure water (2,850 g) were dispersed and stirred for 10 minutes, and the mixture was circulated once using a wet dispersion machine (DYNO-MILL, manufactured by Shinmaru Enterprises Corporation) under the conditions of a circumferential speed of 8 m/s, a flow rate of 500 mL/min, and alumina beads with $\varphi$0.5 mm (2,690 g); the mixture was then circulated for 30 minutes for an even dispersion to produce a magnesia slurry.

The alumina slurry (1,250 g), the magnesia slurry (12.79 g), pure water (111.25 g), a binder (30.85 g, SA-261P, manufactured by Japan Coating Resin Corporation), a plasticizer (7.71 g, PEG-400, manufactured by Fujifilm Wako Pure Chemical Corporation) were mixed and then stirred for 10 minutes. The obtained slurry was spray dried using a spray dryer (L-8i type, manufactured by Ohkawara Kakohki Co., Ltd.) under the conditions of a flow rate of 79 g/min, a number of atomizer rotations of 18,000 rpm, an inlet temperature of 180°C, an outlet temperature of 90°C, and a hot air pressure difference of 1.1 kPa, to produce an alumina granule. It should be noted that the content of MgO contained in the alumina granule is listed in Table 2 in terms of metal element equivalent value.

A sintered body for translucency measurement was produced from the obtained alumina granule in the same manner as Example 1.

(Examples 5, 7, and 9)

Primary alumina particles were produced to prepare an alumina slurry in the same manner as Example 2.
A magnesia slurry was prepared to produce an alumina granule in the same manner as Example 4; then, a sintered body for translucency measurement was produced in the same manner as Example 1.

(Example 10)

Primary alumina particles were produced to prepare an alumina slurry in the same manner as Example 1.
A magnesia slurry was prepared in the same manner as Example 4.
In addition, chromium oxide powder (15 g, manufactured by Fujifilm Wako Pure Chemical Corporation) and pure water (285 g) were dispersed by a ball mill for 1 hour to produce a chromium oxide slurry.
The alumina slurry (1,250 g), the magnesia slurry (12.79 g), pure water (111.25 g), a binder (30.85 g, SA-261P, manufactured by Japan Coating Resin Corporation), a plasticizer (7.71 g, PEG-400, manufactured by Fujifilm Wako Pure Chemical Corporation), and the chromium oxide slurry (22.5 g) were mixed and then stirred for 10 minutes. The obtained slurry was spray dried using a spray dryer (L-8i type, manufactured by Ohkawara Kakohki Co., Ltd.) under the conditions of a flow rate of 79 g/min, a number of atomizer rotations of 18,000 rpm, an inlet temperature of 180°C, an outlet temperature of 90°C, and a hot air pressure difference of 1.1 kPa, to produce an alumina granule. It should be noted that the contents of MgO and $Cr_2O_3$ contained in the alumina granule are listed in Table 4 in terms of metal element equivalent value.

(Production of colored alumina sintered body)

A cylindrical mold with a diameter $\varphi$ of 20 mm was filled with the alumina granule obtained in Example 10 (1 g) and was subjected to a uniaxial molding with a pressure of 30 MPa for 30 seconds followed by a cold isostatic press (CIP) molding with a pressure of 200 MPa for 3 minutes repeated for five times to obtain an alumina molded body. The temperature was increased to 600°C with the temperature rising rate of 100°C/hr, and the molded body was fired in the air and held at that temperature for 2 hours to pre-fire. The temperature was increased to 1,450°C with the temperature rising rate of 200°C/hr, and the alumina pre-fired body was fired in the air and held at that temperature for 2 hours to obtain an alumina sintered body that is colored (colored alumina sintered body). The exterior (color tone) of the colored alumina sintered body was observed with the naked eye. The results of the exterior observation are given in Table 4.

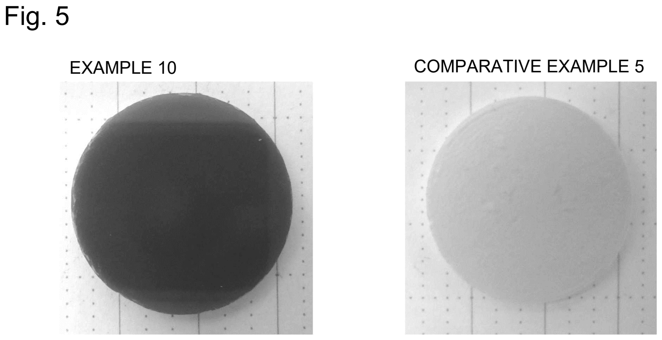

Figure 5 displays photographs of the colored alumina sintered bodies produced in Example and Comparative Example.

(Example 11)

In the same manner as Example 10, an alumina slurry was prepared, and a magnesia slurry was prepared; then, a chromium oxide slurry was prepared, and an alumina granule was produced to produce a colored alumina sintered body except that primary alumina particles were produced in the same manner as Example 2. It should be noted that the contents of MgO and $Cr_2O_3$ contained in the alumina granule are listed in Table 4 in terms of metal element equivalent value.

(Comparative Example 1)

An alumina slurry was prepared in the same manner as Example 1 except that an $\alpha$-alumina powder (AKP-30 manufactured by Sumitomo Chemical Company, Ltd.) was used as primary alumina particles.
Also, an alumina granule was produced to produce an alumina sintered body in the same manner as Example 1.

(Comparative Example 2)

An alumina slurry was prepared in the same manner as Example 1 except that an $\alpha$-alumina powder (AKP-20 manufactured by Sumitomo Chemical Company, Ltd.) was used as primary alumina particles.
Also, an alumina granule was produced to produce an alumina sintered body in the same manner as Example 1.

(Comparative Example 3)

The same primary alumina particles as Comparative Example 1 were provided to prepare an alumina slurry in the same manner as Comparative Example 1.

A magnesia slurry was prepared in the same manner as Example 4.

An alumina granule was produced in the same manner as Example 6.

A sintered body for translucency measurement was produced in the same manner as Example 1.

It should be noted that the content of MgO contained in the alumina granule is listed in Table 2 in terms of metal element equivalent value.

(Comparative Example 4)

The same primary alumina particles as Comparative Example 2 were provided to prepare an alumina slurry in the same manner as Comparative Example 2.

A magnesia slurry was prepared in the same manner as Example 4.

An alumina granule was produced in the same manner as Example 6.

A sintered body for translucency measurement was produced in the same manner as Example 1.

It should be noted that the content of MgO contained in the alumina granule is listed in Table 2 in terms of metal element equivalent value.

(Comparative Example 5)

In the same manner as Example 10, an alumina slurry was prepared, and a magnesia slurry was prepared; then, a chromium oxide slurry was prepared, and an alumina granule was produced to produce a colored alumina sintered body except that the same primary alumina particles as Comparative Example 1 were provided. It should be noted that the contents of MgO and $Cr_2O_3$ contained in the alumina granule are listed in Table 4 in terms of metal element equivalent value.

The results from various measurements on the alumina granule and the alumina sintered body according to Examples and Comparative Examples are listed in Tables 1 to 4.

[Table 1]

| | Pore radius of alumina granule ($\mu$m) | Specific surface diameter of primary alumina particle (nm) | Average circularity of primary alumina particle | Average aspect ratio of primary alumina particle | Density of alumina sintered body (g/cm³) | |
| | | | | | Sintering temperature 1250°C | Sintering temperature 1350°C |
|---|---|---|---|---|---|---|
| Example 1 | 0.038 | 143 | 0.809 | 1.267 | 3.55 | 3.96 |
| Example 2 | 0.048 | 147 | 0.813 | 1.211 | 3.35 | 3.95 |
| Example 3 | 0.041 | 135 | 0.710 | 1.499 | 3.18 | 3.85 |
| Comparative Example 1 | 0.061 | 203 | 0.717 | 1.487 | 2.89 | 3.65 |
| Comparative Example 2 | 0.091 | 273 | 0.730 | 1.440 | 2.73 | 3.27 |

[Table 2]

| | Pore radius of alumina granule ($\mu$m) | Specific surface diameter of primary alumina particle (nm) | Average circularity of primary alumina particle | Average aspect ratio of primary alumina particle | Added amount of MgO (metal element equivalent value) (ppm) |
|---|---|---|---|---|---|
| Example 1 | 0.038 | 143 | 0.809 | 1.267 | 0 |
| Example 2 | 0.048 | 147 | 0.813 | 1.211 | 0 |
| Example 4 | 0.037 | 143 | 0.809 | 1.267 | 500 |

(continued)

| | Pore radius of alumina granule (μm) | Specific surface diameter of primary alumina particle (nm) | Average circularity of primary alumina particle | Average aspect ratio of primary alumina particle | Added amount of MgO (metal element equivalent value) (ppm) |
|---|---|---|---|---|---|
| Example 5 | 0.040 | 147 | 0.813 | 1.211 | 500 |
| Example 6 | 0.037 | 143 | 0.809 | 1.267 | 1000 |
| Example 7 | 0.040 | 147 | 0.813 | 1.211 | 1000 |
| Example 8 | 0.037 | 143 | 0.809 | 1.267 | 2000 |
| Example 9 | 0.040 | 147 | 0.813 | 1.211 | 2000 |
| Comparative Example 3 | 0.061 | 203 | 0.717 | 1.487 | 1000 |
| Comparative Example 4 | 0.091 | 273 | 0.730 | 1.440 | 1000 |

[Table 3]

| | Translucency of sintered body for translucency measurement | | | |
|---|---|---|---|---|
| | Total luminous transmittance (TT) (%) | | Parallel transmittance (PT) (%) | |
| | Sintered at 1350°C | Sintered at 1450°C | Sintered at 1350°C | Sintered at 1450°C |
| Example 1 | 37.3 | 46.1 | 0.2 | 0.4 |
| Example 2 | 25.8 | 39.2 | 0.1 | 0.2 |
| Example 4 | 41.6 | 58.0 | 0.3 | 5.1 |
| Example 5 | 36.7 | 50.3 | 0.2 | 1.5 |
| Example 6 | 43.7 | 58.9 | 0.4 | 5.4 |
| Example 7 | 39.8 | 49.2 | 0.2 | 1.1 |
| Example 8 | 40.5 | 54.5 | 0.2 | 2.3 |
| Example 9 | 33.6 | 47.9 | 0.2 | 0.7 |
| Comparative Example 3 | 3.0 | 21.8 | <0.1 | 0.1 |
| Comparative Example 4 | 3.5 | 7.8 | <0.1 | 0.1 |

[Table 4]

| | Pore radius of alumina granule (μm) | Specific surface diameter of primary alumina particle (nm) | Average circularity of primary alumina particle | Average aspect ratio of primary alumina particle | Added amount of MgO (metal element equivalent value) (ppm) | Added amount of $Cr_2O_3$ (metal element equivalent value) (ppm) | Exterior |
|---|---|---|---|---|---|---|---|
| Example 10 | 0.037 | 143 | 0.809 | 1.267 | 500 | 1000 | Red |
| Example 11 | 0.040 | 147 | 0.813 | 1.211 | 500 | 1000 | Red |
| Comparative Example 5 | 0.061 | 203 | 0.717 | 1.487 | 500 | 1000 | Light pink |

The measurement results in Tables 1 to 4 are now discussed.

According to the results from Table 1, in the sintering test at low temperatures (1250 °C, 1350 °C), it was found that the alumina granule according to Examples and satisfying the requirements stipulated in the present embodiment can manufacture an alumina sintered body that is denser than the alumina granule in Comparative Example. From this, it was confirmed that the alumina granule according to the present embodiment has an excellent sinterability at a low temperature.

According to the results from Tables 2 and 3, it was found that the alumina granule according to Examples and satisfying the requirements stipulated in the present embodiment can manufacture an alumina sintered body with better translucency than the alumina granule in Comparative Examples. Also, comparing among the groups of Examples with which the only difference is the added amount of MgO (a group consisting of Examples 1, 4, 6, and 8; and a group consisting of Examples 2, 5, 7, and 9), it was found that if the alumina granule with the added amount of MgO of 500 to 1,000 ppm is used, an alumina sintered body having superior translucency can be manufactured.

According to the results from Table 4, it was found that the alumina granule according to Examples and satisfying the requirements stipulated by the present embodiment can manufacture a brighter red alumina sintered body than the alumina granule in Comparative Example (see Figure 5). From this, it was confirmed that the alumina granule according to the present embodiment can provide a colored alumina sintered body having a vibrant color.

The present application claims a priority based on prior applications of Japanese Patent Application No. 2023-070415, filed in Japan on April 21, 2023, and Japanese Patent Application No. 2023-160734, filed in Japan on September 25, 2023, the contents of which are incorporated herein by reference in its entirety.

**Claims**

1. An alumina granule composed of primary alumina particles bound by a binder, wherein
   the granule has internal pores, and a pore radius corresponding to the maximum value of the log differential pore volume is 0.055 μm or less.

2. The alumina granule according to claim 1, wherein the primary alumina particles have a specific surface diameter of 90 nm or more and less than 200 nm.

3. The alumina granule according to claim 1 or 2, wherein the primary alumina particles have an average circularity of 0.74 or more.

4. The alumina granule according to claim 1 or 2, wherein the primary alumina particles have an average aspect ratio of 1.40 or less.

5. The alumina granule according to claim 1 or 2, comprising 10 to 3,000 ppm of a sintering additive in terms of metal element based on 100% by mass of an alumina content contained in the alumina granule.

Fig. 1

Fig. 2

EXAMPLE 1

EXAMPLE 2

Fig. 3

COMPARATIVE EXAMPLE 1

COMPARATIVE EXAMPLE 2

Fig. 4

EXAMPLE 4

EXAMPLE 5

EXAMPLE 6

COMPARATIVE EXAMPLE 3

COMPARATIVE EXAMPLE 4

Fig. 5

EXAMPLE 10

COMPARATIVE EXAMPLE 5

## INTERNATIONAL SEARCH REPORT

| | |
|---|---|
| | International application No. |
| | **PCT/JP2024/010515** |

**A.  CLASSIFICATION OF SUBJECT MATTER**

*C01F 7/025*(2022.01)i; *C04B 35/10*(2006.01)i; *C04B 35/111*(2006.01)i
FI:    C01F7/025; C04B35/10; C04B35/111

According to International Patent Classification (IPC) or to both national classification and IPC

**B.  FIELDS SEARCHED**

Minimum documentation searched (classification system followed by classification symbols)

C01F7/025; C04B35/10; C04B35/111

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | JP 2007-055888 A (SUMITOMO CHEMICAL COMPANY, LIMITED) 08 March 2007 (2007-03-08)<br>claims 1-9, paragraphs [0062]-[0072], fig. 1-2 | 1-5 |
| A | WO 2020/196605 A1 (SUMITOMO CHEMICAL COMPANY, LIMITED) 01 October 2020 (2020-10-01)<br>claims 1-4, paragraphs [0063]-[0087], fig. 7, 9 | 1-5 |
| A | JP 2017-523109 A (IFP ENERGIES NOUVELLES) 17 August 2017 (2017-08-17)<br>entire text | 1-5 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/010515**

| Patent document cited in search report | | | Publication date (day/month/year) | Patent family member(s) | | | Publication date (day/month/year) |
|---|---|---|---|---|---|---|---|
| JP | 2007-055888 | A | 08 March 2007 | US | 2007/0021292 | A1 | |
| | | | | claims 1-9, paragraphs [0072]-[0086], fig. 1-2 | | | |
| | | | | KR | 10-2007-0013213 | A | |
| | | | | CN | 1903724 | A | |
| WO | 2020/196605 | A1 | 01 October 2020 | US | 2022/0169571 | A1 | |
| | | | | claims 1-4, paragraphs [0107]-[0136], fig. 7, 9 | | | |
| | | | | EP | 3950637 | A1 | |
| | | | | CN | 113631529 | A | |
| | | | | KR | 10-2021-0142641 | A | |
| JP | 2017-523109 | A | 17 August 2017 | US | 2017/0101324 | A1 | |
| | | | | entire text | | | |
| | | | | WO | 2015/189199 | A1 | |
| | | | | EP | 3154907 | A1 | |
| | | | | CN | 107155324 | A | |

Form PCT/ISA/210 (patent family annex) (July 2022)

**EP 4 653 392 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006027914 A
- JP 2007197265 A
- JP 2023070415 A
- JP 2023160734 A